# EUROPÄISCHE PATENTSCHRIFT

(11) **EP 3 118 499 B1**
(45) Veröffentlichungstag und Bekanntmachung des Hinweises auf die Patenterteilung: **08.05.2019**
(21) Anmeldenummer: 15177304.1
(22) Anmeldetag: 17.07.2015
(51) Int. Cl.: F16K 27/00, F15B 13/08

(54) **VENTILANORDNUNG**
VALVE ASSEMBLY
SYSTÈME DE VANNES

(43) Veröffentlichungstag der Anmeldung: 18.01.2017
(73) Patentinhaber: FESTO AG & Co. KG, 73734 Esslingen (DE)
(72) Erfinder: STARZMANN, Ralf, 73262 Reichenbach (DE); KÜHBAUCH, Heiko, 73257 Köngen (DE); RÜHLE, Peter, 71384 Weinstadt-Schnait (DE)
(74) Vertreter: Patentanwälte Magenbauer & Kollegen Partnerschaft mbB

(56) Entgegenhaltungen:
- WO-A1-2008/086848
- DE-A1-102008 050 606
- DE-B3-102009 006 654
- US-A- 4 165 139

## Beschreibung

Die Erfindung betrifft eine Ventilanordnung, mit einem sich entlang einer Längsachse erstreckenden Ventilträger, der von mehreren in zueinander parallelen und zu seiner Längsachse rechtwinkligen Kanalerstreckungsebenen verlaufenden Arbeitskanälen durchsetzt ist, die jeweils einerseits, mit einer ersten Kanalmündung, zu einer zur Bestückung mit einer Mehrzahl von Steuerventilen ausgebildeten Bestückungsfläche und andererseits, mit einer zweiten Kanalmündung, zu einer Kanalaustrittsfläche ausmünden, wobei die auf der Bestückungsfläche montierten Steuerventile jeweils mit einer der ersten Kanalmündungen in Fluidverbindung stehen und wobei die zweiten Kanalmündungen entlang der Längsachse des Ventilträgers in einer Reihe liegend aufeinanderfolgend angeordnet sind.

Eine aus der DE 10 2009 006 654 B3 bekannte Ventilanordnung ist als eine Sortiervorrichtung ausgebildet und wird in Sortieranlagen eingesetzt, um aus einem Förderstrom von Stückgut einzelne Teile unter Berücksichtigung gewisser Gesichtspunkte durch pneumatische Druckluftbeaufschlagung mittels Luftstößen gezielt herauszublasen. Die Anwendungsfelder sind vielfältig und reichen von der Nahrungsmittelindustrie über den Bergbau bis hin zu Recyclinganwendungen bei der Abfallverwertung. Die individuellen Luftstöße werden mithilfe von elektrisch betätigbaren Steuerventilen erzeugt, die als 2/2-Wegeventile ausgebildet sind und im betätigten Zustand Druckluft durch einen zugeordneten Arbeitskanal hindurchleiten, der mit einer Sortierdüse kommuniziert. Die Sortierdüsen sind in einem Düsenkörper ausgebildet, der an eine Kanalaustrittsfläche eines mit den Steuerventilen bestückten Ventilträgers angebaut ist, zu der die Arbeitskanäle mit je einer zweiten Kanalmündung ausmünden. Mit ihren entgegengesetzten ersten Kanalmündungen sind die Arbeitskanäle zu der Bestückungsfläche hin offen und stehen dort mit den montierten Steuerventilen in Fluidverbindung. Um auf kleinstem Raum gleichzeitig möglichst viele Sortiervorgänge durchführen zu können, sollten die an der Kanalaustrittsfläche aufgereihten zweiten Kanalmündungen in der Längsrichtung des Ventilträgers einen möglichst kleinen Abstand zueinander aufweisen. Allerdings lässt sich ein gewisser Mindestabstand wegen der für die Steuerventile benötigten Baubreite nicht unterschreiten. So ist in dem bekannten Fall der Mindestabstand zwischen den zweiten Kanalmündungen an den Mittenabstand zwischen den an der Bestückungsfläche aneinandergereiht montierten Steuerventilen gekoppelt.

Intern hat die Anmelderin schon darüber nachgedacht, an der Bestückungsfläche mehrere Reihen von Steuerventilen nebeneinander anzuordnen und die erforderlichen Arbeitskanäle mit bezüglich der Längsachse des Ventilträgers geneigtem Verlauf im Innern des Ventilträgers auszubilden. Die daraus resultierende komplexe Struktur wäre allerdings mit einem sehr großen Herstellungsaufwand verbunden.

Aus der US 4,165,139 A ist ein Verteiler bekannt, an dessen einer Seite eine Mehrzahl von pneumatisch betriebenen Steuereinheiten angeordnet ist. Zum pneumatischen Anschluss der Steuereinheiten ist eine Mehrzahl von Öffnungen vorhanden, die auf schräg zur Längsachse des Verteilers verlaufenden gedachten Geraden liegen.

Der Erfindung liegt die Aufgabe zugrunde, Maßnahmen zu treffen, die bei kompakten Abmessungen und einfacher Herstellbarkeit der Ventilanordnung einen geringen Abstand zwischen den an der Kanalaustrittsfläche angeordneten zweiten Kanalmündungen der Arbeitskanäle zulassen.

Zur Lösung dieser Aufgabe ist in Verbindung mit den eingangs genannten Merkmalen vorgesehen, dass die ersten Kanalmündungen mindestens einer Arbeitskanalgruppe von Arbeitskanälen, deren zweite Kanalmündungen in der Kanalaustrittsfläche unmittelbar aufeinanderfolgend angeordnet sind, in der Bestückungsfläche entlang einer bezüglich der Längsachse des Ventilträgers schräg ausgerichteten Mündungsverteilachse mit Abstand aufeinanderfolgend angeordnet sind, wobei auch die auf der Bestückungsfläche montierten und mit den zur gleichen Arbeitsgruppe gehörenden ersten Kanalmündungen in Fluidverbindung stehenden Steuerventile entlang dieser schräg ausgerichteten Mündungsverteilachse aufeinanderfolgend angeordnet sind.

Auf diese Weise ist an der Kanalaustrittsfläche ein geringer Mündungsabstand zwischen den dort befindlichen zweiten Kanalmündungen möglich, obwohl die zu diesen zweiten Kanalmündungen führenden Arbeitskanäle in zur Längsachse des Ventilträgers rechtwinkeligen Kanalerstreckungsebenen verlaufen und dementsprechend einfach herstellbar sind. Verantwortlich dafür ist eine derartige Verteilung der ersten Kanalmündungen, dass zu wenigstens einer als Arbeitskanalgruppe bezeichneten Gruppe von Arbeitskanälen gehörende erste Kanalmündungen nicht wie bisher in einer zur Längsachse des Ventilträgers parallelen Linie aneinandergereiht sind, sondern entlang einer gedachten Mündungsverteilachse aneinandergereiht sind, die bezüglich der Längsachse des Ventilträgers schräg ausgerichtet ist. Mit dieser Schräganordnung ist in Achsrichtung der Mündungsverteilachse ein relativ großer Abstand zwischen den ersten Kanalmündungen realisierbar, was auch bei größeren Abmessungen der Steuerventile eine problemlose Aneinanderreihung der zugeordneten Steuerventile ohne gegenseitige Behinderung ermöglicht. Auf einer relativ kleinen Bestückungsfläche ist folglich eine hohe Steuerventildichte möglich, was bei kompakten Gesamtabmessungen die Realisierung einer Reihe eng beabstandeter zweiter Kanalmündungen an der Kanalaustrittsfläche begünstigt.

Erfindungsgemäß verfügt der Ventilträger über eine gedachte Hochachse, die rechtwinkelig zur Längsachse und auch zur Bestückungsfläche des Ventilträgers ausgerichtet ist. Die der gleichen Arbeitskanalgruppe angehörenden ersten Kanalmündungen sind dabei zweckmäßigerweise auf einander entgegengesetzten Seiten einer Mittelebene angeordnet, die von der Längsachse und der Hochachse des Ventilträgers aufgespannt wird und die gleichzeitig die an der Kanalaustrittsfläche angeordneten zweiten Kanalmündungen durchsetzt.

Vorteilhafte Weiterbildungen der Erfindung gehen aus den Unteransprüchen hervor.

Wenn nur relativ wenige zweite Kanalmündungen benötigt werden, können die Arbeitskanäle zu einer einzigen Arbeitskanalgruppe zusammengefasst sein, deren zweite Kanalmündungen an der Kanalaustrittsfläche in Achsrichtung der Längsachse des Ventilträgers aneinandergereiht sind und deren in der Bestückungsfläche ausgebildete erste Kanalmündungen gemeinsam auf ein und derselben Mündungsverteilachse liegen, die bezüglich der Längsachse des Ventilträgers geneigt ist. Besteht allerdings Bedarf nach einer größeren Anzahl von zweiten Kanalmündungen, so ist es vorteilhaft, wenn die Arbeitskanäle zur Begrenzung der Baubreite des Ventilträgers in mehrere Arbeitskanalgruppen eingeteilt sind, denen jeweils eine eigene Mündungsverteilachse zugeordnet ist, wobei die Mündungsverteilachsen dieser mehreren Arbeitskanalgruppen zum einen schräg bezüglich der Längsachse des Ventilträgers ausgerichtet sind, zum anderen aber auch parallel zueinander verlaufen. Entsprechend ergibt sich dann auch eine Mehrfachanordnung von Reihen von Steuerventilen, die jeweils in Achsrichtung der zugeordneten Mündungsverteilachse aneinandergereiht sind.

Bevorzugt sind die zur jeweils gleichen Arbeitskanalgruppe gehörenden ersten Kanalmündungen an der Bestückungsfläche mit gleichem Abstand zueinander entlang der jeweils zugeordneten Mündungsverteilachse angeordnet.

Obwohl pro Arbeitskanalgruppe auch eine andere Anzahl von Arbeitskanälen vorgesehen sein kann, hat es sich als optimales Kosten-Nutzen-Verhältnis herausgestellt, wenn jede Arbeitskanalgruppe genau vier Arbeitskanäle umfasst. Mindestens eine und bevorzugt jede Arbeitskanalgruppe enthält mindestens zwei oder mehr als zwei Arbeitskanäle.

Bei den Steuerventilen handelt es sich zweckmäßigerweise um elektrisch betätigbare Ventile, die vorzugsweise jeweils als 2/2-Wegeventile ausgebildet sind.

Bevorzugt ist die mit den zweiten Kanalmündungen ausgestattete Kanalaustrittsfläche eine von der Bestückungsfläche wegweisende Fläche und ist gleichzeitig entgegengesetzt zu der Bestückungsfläche orientiert. Bei einer bevorzugten Ausrichtung der Ventilanordnung sind daher die ersten Kanalmündungen an der nach oben weisenden Bestückungsfläche und die zweiten Kanalmündungen an der nach unten weisenden Kanalaustrittsfläche angeordnet.

In vorteilhafter Weise hat jeder Arbeitskanal zweckmäßigerweise über seine gesamte Länge hinweg einen linearen Längsverlauf. Dies erlaubt eine besonders einfache Herstellung.

Als besonders zweckmäßig hat es sich erwiesen, wenn alle Arbeitskanäle bezogen auf eine von der Längsachse und einer zur Bestückungsfläche rechtwinkeligen Hochachse des Ventilträgers aufgespannten Ebene einen schrägen Verlauf haben, insbesondere derart, dass zur gleichen Arbeitskanalgruppe gehörende Arbeitskanäle ausgehend von der Kanalaustrittsfläche in Richtung zur Bestückungsfläche fächerförmig auseinanderstreben, wenn eine Betrachtung in Achsrichtung der Längsachse des Ventilträgers erfolgt.

Die der jeweils gleichen Arbeitskanalgruppe angehörenden Steuerventile können als individuelle Einzelventile ausgebildet sein. Jedes Steuerventil kann individuell an der Bestückungsfläche montiert sein. Als vorteilhafter wird allerdings eine Ausführungsform angesehen, bei der zur gleichen Arbeitskanalgruppe gehörende Steuerventile in einer selbsttragenden Steuerventileinheit zusammengefasst sind, die eine Längsachse aufweist und die so an der Bestückungsfläche montiert ist, dass ihre Längsachse parallel zur zugeordneten Mündungslängsachse verläuft, womit jede eine Längsgestalt aufweisende Steuerventileinheit auf der Bestückungsfläche schräg zur Längsachse des Ventilträgers ausgerichtet ist.

Die Zusammenfassung mehrerer Steuerventile zu einer Steuerventileinheit erlaubt eine zeitsparende gleichzeitige Montage oder Demontage mehrerer Steuerventile. Kurze Montage- bzw. Demontagezeiten reduzieren die Stillstandzeiten einer mit der Ventilanordnung ausgestatteten Anlage.

Als besonders vorteilhaft wird ein modularer Aufbau der einzelnen Steuerventileinheiten angesehen. Dabei sind die in einer jeweiligen Steuerventileinheit zusammengefassten Steuerventile als eigenständige Ventilmodule ausgebildet, die durch geeignete Befestigungsmaßnahmen aneinander fixiert sind, beispielsweise durch Klammern oder durch Zuganker. Der modulare Aufbau gestattet nach Bedarf eine Ausstattung der Steuerventileinheiten mit einer unterschiedlichen Anzahl von Steuerventilen.

Benachbarte, als Ventilmodule ausgebildete Steuerventile sind zweckmäßigerweise derart miteinander verbunden, dass sie gemeinsam mit dem zu steuernden Fluid versorgt werden können, zu welchem Zweck die Steuerventileinheit vorzugsweise über einen Speiseanschluss verfügt, der im an der Bestückungsfläche montierten Zustand der Steuerventileinheit mit einem im Ventilträger ausgebildeten Hauptversorgungskanal in Fluidverbindung steht. Der Hauptversorgungskanal erstreckt sich zweckmäßigerweise in der Längsrichtung des Ventilträgers und mündet mit mehreren Versorgungs-Zweigkanälen derart zu der Bestückungsfläche aus, dass jede Steuerventileinheit über einen ihr zugeordneten Speiseanschluss mit einem der Versorgungs-Zweigkanäle in Fluidverbindung steht. Sollte ein besonders großer Fluidbedarf bestehen, können die Steuerventileinheiten auch jeweils mit mehreren Speiseanschlüssen ausgestattet sein, sodass sie mit hoher Strömungsrate aus dem Hauptversorgungskanal des Ventilträgers gespeist werden können.

Bei einem modularen Aufbau der Steuerventileinheiten ist es vorteilhaft, wenn der mindestens eine Speiseanschluss an einem gesonderten Einspeisemodul ausgebildet ist, das mit den als Ventilmodule ausgebildeten Steuerventilen verbunden ist.

Die Steuerventileinheiten sind zweckmäßigerweise unabhängig voneinander am Ventilträger befestigbar oder befestigt. Zu diesem Zweck ist die Ventilanordnung mit geeigneten Steuerventileinheit-Befestigungsmitteln ausgestattet.

Besonders vorteilhaft aufgebaute Steuerventileinheit-Befestigungsmittel enthalten eine im Bereich der Bestückungsfläche im Ventilträger ausgebildete Verankerungsnut, die sich in Achsrichtung der Längsrichtung des Ventilträgers erstreckt und die zweckmäßigerweise zur Fixierung sämtlicher Steuerventile der Ventilanordnung genutzt wird. Jede Steuerventileinheit weist an einem ersten stirnseitigen Endbereich einen Verankerungshaken auf, der das lösbare Einhaken in die Verankerungsnut ermöglicht. Außerdem ist jeder Steuerventileinheit eine zusätzliche, weitere Befestigungseinrichtung zugeordnet, die ausgebildet ist, um die Steuerventileinheit an ihrem den ersten stirnseitigen Endbereich entgegengesetzten zweiten stirnseitigen Endbereich in bevorzugt lösbarer Weise an dem Ventilträger zu fixieren. Diese weitere Befestigungseinrichtung ist vorzugsweise eine Schraubbefestigungseinrichtung und enthält dabei mindestens eine Befestigungsschraube, die in eine Gewindebohrung des Ventilträgers einschraubbar ist, um die Steuerventileinheit mit der Bestückungsfläche zu verspannen.

Mithilfe des Verankerungshakens lässt sich jede Steuerventileinheit zur Montage an der Bestückungsfläche in Schrägausrichtung in die Verankerungsnut einhaken und anschließend an die Bestückungsfläche heranschwenken. Zur Endfixierung wird dann die weitere Befestigungseinrichtung aktiviert.

Bevorzugt ist jeder Verankerungshaken zumindest partiell mit einer runden Außenkontur versehen. Durch die Abrundung besteht die Möglichkeit, die Steuerventileinheit im in die Verankerungsnut eingehakten Zustand parallel zur Bestückungsfläche relativ zum Ventilträger zu verschwenken. Auf diese Weise kann ein und dieselbe Steuerventileinheit mit variabler Schrägstellung auf der Bestückungsfläche positioniert werden. Dies kann man sich vorteilhaft dann zunutze machen, wenn ein und derselbe Typ von Steuerventileinheit mit Ventilträgern zu kombinieren ist, die sich im Lochabstand ihrer ersten Kanalmündungen voneinander unterscheiden. Der Neigungswinkel bzw. Schrägwinkel zwischen der Längsachse der Steuerventileinheit und der Längsachse des Ventilträgers bestimmt letztlich den in der Längsrichtung des Ventilträgers gemessenen Abstand zwischen den Arbeitskanälen und folglich auch den entsprechend gemessenen Abstand zwischen den zweiten Kanalmündungen.

Der Verankerungshaken besitzt zweckmäßigerweise einen bevorzugt abgerundeten Hakenkopf, der insbesondere am Ende eines Schaftabschnittes des Verankerungshakens angeordnet ist, der genutzt werden kann, um die Steuerventileinheit am Ventilträger zu positionieren. Vorzugsweise ist die Verankerungsnut an ihrem Rand mit einer Reihe von Indexaussparungen versehen, in die die Verankerungshaken der Steuerventileinheiten mit ihrem in diesem Fall als ein Indexkörper fungierenden Schaftabschnitt formschlüssig eingreifen können, um die Position der zugehörigen Steuerventileinheit vorzugeben.

Die Ventilanordnung ist prinzipiell für beliebige fluidtechnische Zwecke einsetzbar. Als besonders vorteilhaft erweist sich allerdings ihre Nutzung als Sortiervorrichtung zum Aussortieren von Teilen mittels Luftstößen. Dabei kommuniziert jeder Arbeitskanal mit einer Sortierdüse der Ventilanordnung bzw. Sortiervorrichtung, durch die hindurch durch entsprechende Aktivierung des zugeordneten Steuerventils impulsartig Luft ausgestoßen werden kann. Je nach Ausgestaltung der Ventilanordnung können die zweiten Kanalmündungen unmittelbar selbst jeweils eine Sortierdüse bilden oder es wird, was den Regelfall darstellt, ein separater Düsenkörper an der Kanalaustrittsfläche montiert, in dem mit den Arbeitskanälen kommunizierende Sortierkanäle ausgebildet sind, die jeweils mit einer Sortierdüse ins Freie ausmünden.

Nachfolgend wird die Erfindung anhand der beiliegenden Zeichnung näher erläutert. In dieser zeigen:
- Figur 1: in perspektivischer Darstellung eine als Sortiervorrichtung ausgebildete erfindungsgemäße Ventilanordnung bevorzugten Aufbaus, wobei von den zu der Ventilanordnung gehörenden Steuerventileinheiten nur einige abgebildet und eine Steuerventileinheit im Moment ihrer Montage auf dem Ventilträger illustriert ist,

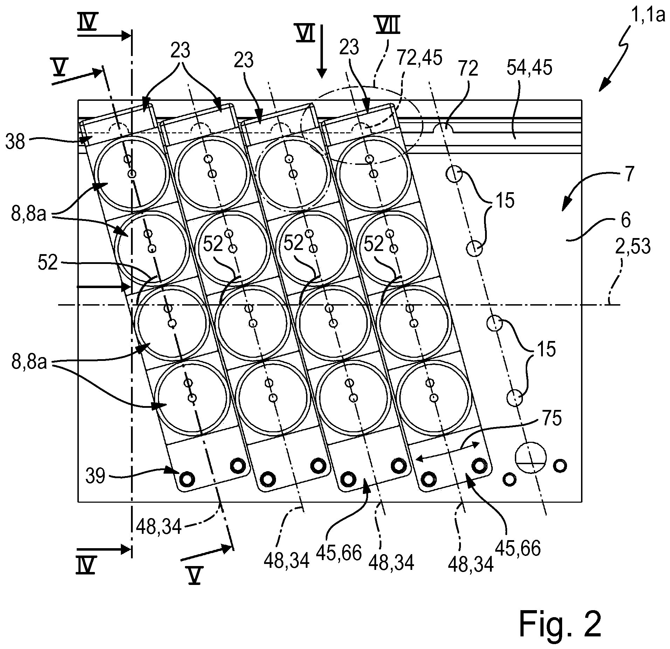

- Figur 2: die Anordnung aus Figur 1 in einer Draufsicht mit Blickrichtung gemäß Pfeil II aus Figur 1,

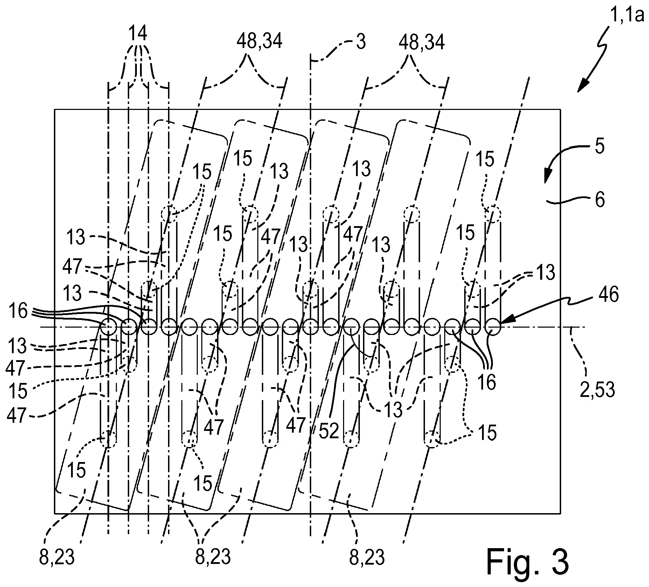

- Figur 3: eine Unteransicht der Ventilanordnung aus Figur 1 mit Blickrichtung gemäß Pfeil III aus Figur 1,
- Figur 4: einen Querschnitt der Ventilanordnung gemäß Schnittlinie IV-IV mit einer zur Längsachse des Ventilträgers rechtwinkeligen Schnittebene,
- Figur 5: einen weiteren Querschnitt der Ventilanordnung, und zwar gemäß Schnittlinie V-V aus Figur 2, wobei die Schnittebene mit einer Mündungsverteilachse zusammenfällt,

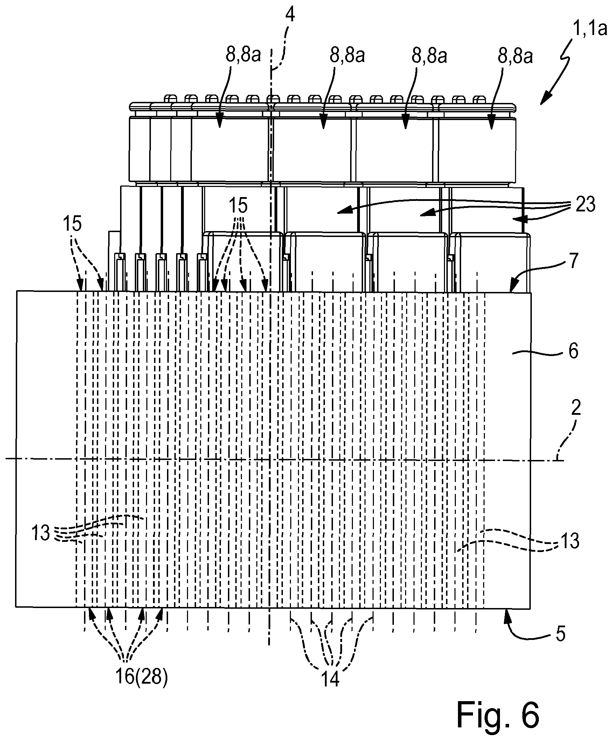

- Figur 6: eine Seitenansicht der Ventilanordnung mit Blickrichtung gemäß Pfeil VI aus Figur 2, wobei die den Ventilträger durchsetzenden Arbeitskanäle gestrichelt angedeutet sind,
- Figur 7: den in Figur 2 strichpunktiert umrahmten Bereich VII in einer vergrößerten Darstellung, wobei der Eingriff zwischen einem Verankerungshaken einer Steuerventileinheit und einer Verankerungsnut des Ventilträgers illustriert ist,
- Figur 8: eine Einzeldarstellung eines den Verankerungshaken aufweisenden Endmoduls einer Steuerventileinheit in einer perspektivischen Einzeldarstellung, und
- Figur 9: das Endmodul der Figur 8 aus einer anderen Blickrichtung.

In der Zeichnung ist eine insgesamt mit Bezugsziffer 1 bezeichnete Ventilanordnung illustriert, die für unterschiedlichste fluidtechnische Zwecke nutzbar ist, bei denen es darum geht, die Strömung eines fluidischen Druckmediums zu steuern. Bei dem fluidischen Druckmedium handelt es sich insbesondere um Druckluft. Eine bevorzugte Anwendung der Ventilanordnung 1 ist das Sortieren von Teilen durch gezielte pneumatische Druckluftbeaufschlagung mittels eines Luftstoßes. In diesem Fall repräsentiert die Ventilanordnung 1 eine Sortiervorrichtung 1a, wobei sich das nachstehend beschriebene Ausführungsbeispiel auf eine solche Sortiervorrichtung 1a bezieht, ohne dass damit jedoch eine Beschränkung auf diesen Anwendungsbereich verbunden sein soll.

Die Ventilanordnung 1 verfügt über einen Ventilträger 6, der vorzugsweise blockförmig oder plattenförmig ausgebildet ist und der an seiner Außenseite eine Bestückungsfläche 7 aufweist, an der eine Mehrzahl von Steuerventilen 8 lösbar montierbar ist. Die montierten Steuerventile 8 nehmen an der Bestückungsfläche 7 eine Gebrauchsstellung ein. Bei den Steuerventilen 8 handelt es sich bevorzugt um elektrisch betätigbare Ventile, insbesondere um 2/2-Wegeventile. Jedes Steuerventil 8 ist mit elektrisch leitenden Kontaktmitteln 12 ausgestattet, über die ihnen mittels einer nicht gezeigten elektronischen Steuereinrichtung die für ihre Betätigung erforderlichen elektrischen Betätigungssignale zugeführt werden können.

Der Ventilträger 6 hat eine Längsachse 2, eine hierzu rechtwinkelige Querachse 3 und eine sowohl zur Längsachse 2 als auch zur Querachse 3 rechtwinkelige Hochachse 4. Die Bestückungsfläche 7 verläuft parallel zu der Längsachse 2 und dabei rechtwinkelig zur Hochachse 4.

Der Ventilträger 6 ist von einer Mehrzahl individueller Arbeitskanäle 13 durchsetzt. Jeder dieser Arbeitskanäle 13 erstreckt sich ausschließlich in einer als Kanalerstreckungsebene 14 bezeichneten Ebene, wobei die Kanalerstreckungsebenen 14 sämtliche Arbeitskanäle 13 rechtwinkelig zu der Längsachse 2 verlaufen und unter paralleler Ausrichtung mit Abstand zueinander in Achsrichtung der Längsachse 2 aufeinanderfolgend angeordnet sind.

Jeder der Arbeitskanäle 13 mündet über eine erste Kanalmündung 15 zu der Bestückungsfläche 7 und über eine diesbezüglich entgegengesetzte zweite Kanalmündung 16 zu einer eine andere räumliche Ausrichtung als die Bestückungsfläche 7 aufweisenden Außenfläche des Ventilträgers 6 aus, die als Kanalaustrittsfläche 5 bezeichnet sei. Bevorzugt und entsprechend des Ausführungsbeispiels ist die Kanalaustrittsfläche 5 von der Bestückungsfläche 7 abgewandt und weist in die entgegengesetzte Richtung wie die Bestückungsfläche 7. Zweckmäßigerweise sind die Bestückungsfläche 7 und die Kanalaustrittsfläche 5 parallel zueinander ausgerichtet.

Dementsprechend ist auch die Kanalaustrittsfläche 5 vorzugsweise rechtwinkelig zur der Hochachse 4 ausgerichtet. In einer bevorzugten betriebsbereiten Ausrichtung der Ventilanordnung 1 weist die Bestückungsfläche 7 vertikal nach oben und die Kanalaustrittsfläche 5 vertikal nach unten.

Jeder der ersten Kanalmündungen 15 ist ein eigenes Steuerventil 8 zugeordnet. Jedes Steuerventil 8 verfügt an seiner in der Gebrauchsstellung der Bestückungsfläche 7 zugewandten Unterseite über eine Ausgabeöffnung 17, die in der Gebrauchsstellung des Steuerventils 8 mit einer der ersten Kanalmündungen 15 in Fluidverbindung steht.

Jedes Steuerventil 8 hat ferner eine Einlassöffnung 18, der im Betrieb der Ventilanordnung 1 das zu steuernde Druckmedium zugeführt wird. Dieses zu steuernde Druckmedium wird beim Ausführungsbeispiel innerhalb des Ventilträgers 6 in einem sich in der Längsrichtung des Ventilträgers 6 erstreckenden Hauptversorgungskanal 22 bereitgestellt, der mit den Einlassöffnungen 18 sämtlicher auf der Bestückungsfläche 7 montierter Steuerventile 8 kommuniziert. Der Hauptversorgungskanal 22 wird in nicht gezeigter Weise von einer externen Druckquelle gespeist.

Prinzipiell könnte jede Einlassöffnung 18 individuell mit dem Hauptversorgungskanal 22 verbunden sein. Bevorzugt wird allerdings eine gruppenweise zusammengefasste Fluidverbindung der Steuerventile 8 mit dem Hauptversorgungskanal 22. Bevorzugt resultiert dies daraus, dass die Steuerventile 8 zu mehreren gruppenweise in selbsttragenden Steuerventileinheiten 23 zusammengefasst sind, beispielsweise mit einer Anzahl von vier Steuerventilen 8 pro Steuerventileinheit 23. Jede Steuerventileinheit 23 hat an der im montierten Zustand der Bestückungsfläche 7 zugewandten Unterseite einen Speiseanschluss 24, der mit einem zu der Bestückungsfläche 7 ausmündenden Versorgungs-Zweigkanal 25 in Fluidverbindung steht, der mit dem Hauptversorgungskanal 22 kommuniziert. In dem Ventilträger 6 ist zumindest eine der Anzahl der Steuerventileinheiten 23 entsprechende Anzahl von Versorgungs-Zweigkanälen 25 vorgesehen, so dass jede Steuerventileinheit 23 über ihren Speiseanschluss 24 mit einem der Versorgungs-Zweigkanäle 25 verbindbar ist.

Innerhalb der Steuerventileinheit 23 sind die Einlassöffnungen 18 miteinander verbunden und stehen gemeinsam mit dem Speiseanschluss 24 in Verbindung. Auf diese Weise werden alle Steuerventile 8 an ihrer Einlassöffnung 18 mit dem zu steuernden Druckmedium versorgt.

Jedes Steuerventil 8 verfügt im Innern über ein bewegliches Ventilglied 26, das durch entsprechende Betätigung des zugeordneten Steuerventils 8 wahlweise in einer die Verbindung zwischen der Einlassöffnung 18 und der Ausgabeöffnung 17 unterbrechenden Schließstellung oder in einer diese Verbindung freigebenden Offenstellung positionierbar ist. Die Antriebskraft zum Umschalten und bedarfsgemäßen Festhalten des Ventilgliedes 26 liefert bevorzugt eine elektrisch betätigbare und insbesondere elektromagnetisch ausgebildete Antriebseinrichtung 27 des jeweiligen Steuerventils 8.

Wird im Betrieb der Ventilanordnung 1 ein Steuerventil 8 in die Offenstellung geschaltet, gibt es die Fluidverbindung zwischen dem zugeordneten Arbeitskanal 13 und dem Hauptversorgungskanal 22 frei, mit der Folge, dass aus dem Hauptversorgungskanal 22 stammendes Druckmedium durch den zugeordneten Arbeitskanal 13 hindurch ausströmt. Das Druckmedium verlässt den betreffenden Arbeitskanal 13 an seiner zweiten Kanalmündung 16. Diese zweite Kanalmündung 16 kann unmittelbar als eine Sortierdüse 28 fungieren, die so platziert ist, dass sie einem Förderstrom von zu sortierenden Teilen zugewandt ist. Soll ein nach bestimmten Kriterien ausgewähltes Teil aussortiert werden, erfährt das zugeordnete Steuerventil 8 mithilfe der nicht illustrierten elektronischen Steuereinrichtung ein Betätigungssignal, das ein kurzzeitiges Umschalten aus der bis dahin angenommenen Schließstellung in die Offenstellung bewirkt, so dass das Druckmedium impulsartig aus der Sortierdüse 28 ausgestoßen wird und das auszusortierende Teil wegbläst.

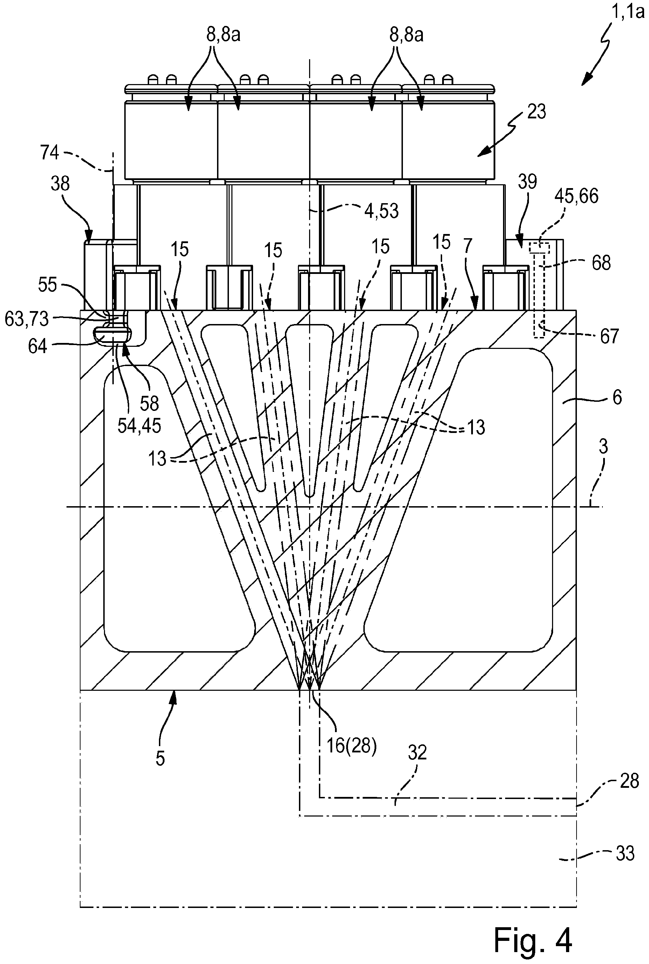

Bei einer alternativen Ausführungsform der Ventilanordnung 1 sind die Sortierdüsen 28 nicht von den zweiten Kanalmündungen 16 gebildet, sondern entsprechend der schematischen Illustration in Figur 4 jeweils von der Mündung eines Sortierkanals 32, der sich an der zweiten Kanalmündung 16 an den Arbeitskanal 13 anschließt. Eine der Anzahl der Arbeitskanäle 13 entsprechende Anzahl solcher jeweils eine Sortierdüse 28 bildender Sortierkanäle 32 ist in einem Düsenkörper 33 ausgebildet, der an der Kanalaustrittsfläche 5 des Ventilträgers 6 montiert ist. Dabei kommuniziert jeder Sortierkanal 32 mit einem der Arbeitskanäle 13.

Jede Steuerventileinheit 23 hat eine längliche Gestalt mit einer Längsachse 34. Die zur gleichen Steuerventileinheit 23 gehörenden Steuerventile 8 sind in der Achsrichtung dieser Längsachse 34 aufeinanderfolgend angeordnet. Sie können gemeinsam einen einstückigen Sockel aufweisen, der von einem die Einlassöffnungen 18 bildenden und zu dem Speiseanschluss 24 führenden Einlasskanal durchsetzt ist. Als vorteilhafter wird allerdings ein modularer Aufbau der Steuerventileinheiten 23 angesehen, wie er exemplarisch beim Ausführungsbeispiel gegeben ist.

Bei der modular aufgebauten Steuerventileinheit 23 sind die Steuerventile 8 als eigenständige Ventilmodule 8a ausgebildet, die in Achsrichtung der Längsachse 34 aneinander angesetzt sind. Zueinander benachbarte Ventilmodule 8a sind durch geeignete Verbindungsmittel 35, beispielsweise Klammerelemente oder Verbindungsschrauben, zusammengehalten, so dass sich eine starre Baugruppe ergibt. Jedes Ventilmodul 8a ist von einem die Einlassöffnung 18 aufweisenden Durchgangskanal 36 durchsetzt, wobei diese Durchgangskanäle 36 miteinander fluchten und dadurch Längenabschnitte eines durchgehenden Einlasskanals 37 bilden. Zwischen aneinander angesetzten Ventilmodulen 8a sind einen leckagefreien Fluidübertritt gewährleistende Dichtungsmittel eingegliedert.

An einem ersten stirnseitigen Endbereich 38 der Steuerventileinheit 23 ist ein den Einlasskanal 37 verschließendes Endmodul 42 angebracht. Am diesbezüglich entgegengesetzten zweiten stirnseitigen Endbereich 39 der Steuerventileinheit 23 befindet sich Einspeisemodul 43, das von einem Speisekanal 44 durchsetzt ist, der einerseits den Speiseanschluss 24 bildet und andererseits mit der Einlassöffnung 18 des benachbarten Ventilmoduls 8a kommuniziert. Endmodul 42 und Einspeisemodul 43 sind in gleicher Weise wie die Ventilmodule 8a untereinander mit dem jeweils benachbarten Ventilmodul 8a verbunden.

Im Verlauf des in dem Einspeisemodul 43 ausgebildeten Speisekanals 44 kann ein Luftfilter integriert sein, um die Gefahr der Zerstörung der Steuerventile 8 durch Schmutzpartikel zu reduzieren.

Jede Steuerventileinheit 23 ist mithilfe von noch zu erläuternden Steuerventileinheit-Befestigungsmitteln 45 in bevorzugt lösbarer Weise unabhängig voneinander an dem Ventilträger 6 fixierbar oder fixiert.

Die zweiten Kanalmündungen 16 sind an der Kanalaustrittsfläche 5 in einer mit der Achsrichtung der Längsachse 2 des Ventilträgers 6 zusammenfallenden Reihenrichtung mit Abstand aufeinanderfolgend angeordnet. Es handelt sich dabei um eine lineare Mündungsreihe 46 aus einer der Anzahl der Arbeitskanäle 13 entsprechenden Anzahl von zweiten Kanalmündungen 16.

Jeweils mehrere Arbeitskanäle 13, die mit in Achsrichtung der Längsachse 2 unmittelbar aufeinanderfolgenden zweiten Kanalmündungen 16 kommunizieren, bilden gedanklich eine Arbeitskanalgruppe 47. Die Anzahl von Arbeitskanälen 13 pro Arbeitskanalgruppe 47 entspricht der Anzahl der in einer jeweiligen Steuerventileinheit 23 enthaltenen Steuerventile 8. Nachdem beim Ausführungsbeispiel jede Steuerventileinheit 23 vier Steuerventile 8 aufweist, setzt sich dementsprechend jede Arbeitskanalgruppe 27 aus vier Arbeitskanälen 13 zusammen, die in vier in Achsrichtung der Längsachse 2 unmittelbar aufeinanderfolgenden Kanalerstreckungsebenen 14 angeordnet sind.

In der Achsrichtung der Längsachse 2 schließen sich die zu den einzelnen Arbeitskanalgruppen 47 gehörenden zweiten Kanalmündungen 16 unmittelbar aneinander an. Es gibt also keine zweiten Kanalmündungen 16, die keiner der Arbeitskanalgruppen 47 angehören.

Eine Besonderheit der Ventilanordnung 1 besteht nun darin, dass die ersten Kanalmündungen 15 der Arbeitskanäle 13 jeder Arbeitskanalgruppe 47 entlang einer gedachten Achslinie verteilt sind, die als Mündungsverteilachse 48 bezeichnet sei und die bezüglich der Längsachse 2 des Ventilträgers 6 schräg ausgerichtet ist. Die Mündungsverteilachsen 48 erstrecken sich parallel zur Bestückungsfläche 7 und sind bezüglich den einzelnen Kanalerstreckungsebenen 14 geneigt. In einer zu der Hochachse 4 rechtwinkeligen Bezugsebene sind die Mündungsverteilachsen 48 bezüglich der Achsrichtung der Längsachse 2 um einen Schrägwinkel 52 geneigt, wobei dieser Schrägwinkel 52 ein von 90° abweichender Winkel ist.

Die zur gleichen Arbeitskanalgruppe 47 gehörenden ersten Kanalmündungen 15 sind entlang der betreffenden Mündungsverteilachse 48 bevorzugt mit gleichem Abstand zueinander verteilt. Dabei ist es vorteilhaft, wenn eine gleiche Anzahl von zweiten Kanalmündungen 16 diesseits und jenseits einer Mittelebene 53 liegt, die von der Längsachse 2 und der Hochachse 4 aufgespannt ist und durch sämtliche zweiten Kanalmündungen 16 hindurchgeht. Der weiter oben erwähnte Schrägwinkel 52 ist ein zwischen der Mündungsverteilachse 48 und der Mittelebene 53 gemessener Winkel.

Beim Ausführungsbeispiel finden sich von den vier Arbeitskanälen 13 jeder Arbeitskanalgruppe 47 zwei zweite Kanalmündungen 16 auf der einen und zwei weitere zweite Kanalmündungen 16 auf der anderen Seite der vorstehend definierten Mittelebene 53.

Die verteilte Anordnung der zweiten Kanalmündungen 16 entlang der schrägen Mündungsverteilachse 48 bringt es mit sich, dass die zur gleichen Arbeitskanalgruppe 47 gehörenden zweiten Kanalmündungen 16 in der Achsrichtung der Längsachse 2 mit Abstand zueinander angeordnet sind.

Die geschilderte Schrägausrichtung beschränkt sich nicht auf die zweiten Kanalmündungen 16, sondern auch auf die Aneinanderreihungsrichtung der mit den Arbeitskanälen 13 einer jeweiligen Arbeitskanalgruppe 47 zusammenarbeitenden Steuerventile 8. Mit anderen Worten sind auch die auf der Bestückungsfläche 7 montierten und mit den zur gleichen Arbeitskanalgruppe 47 gehörenden ersten Kanalmündungen 15 in Fluidverbindung stehenden Steuerventile 8 entlang der schrägen Mündungsverteilachse 48 aufeinanderfolgend angeordnet und bilden jeweils eine zur Längsachse 2 des Ventilträgers 6 schräg ausgerichtete Steuerventilreihe.

Auf das Ausführungsbeispiel bezogen bedeutet dies, dass die in ihrer Gebrauchsstellung an der Bestückungsfläche 7 befestigten Steuerventileinheiten 23 ebenfalls derart schräg bezüglich der Längsachse 2 ausgerichtet sind, dass ihre Längsachsen 34 parallel zu den Mündungsverteilachsen 48 verlaufen.

Die Längsachsen 34 sämtlicher an der Bestückungsfläche 7 montierter Steuerventileinheiten 23 verlaufen parallel zueinander und sind um den Schrägwinkel 52 geneigt zur Längsachse 2 bzw. zu der Mittelebene 53 ausgerichtet.

Der Schrägwinkel 52 zwischen den Längsachsen 34 sämtlicher Steuerventileinheiten 23 und der Längsachse 2 des Ventilträgers 2 ist identisch. Dementsprechend verlaufen die Längsachsen 34 der schräg orientierten Steuerventileinheiten 23 parallel zueinander. Vorzugsweise sind die in Achsrichtung der Längsachse 2 zueinander benachbarten Steuerventileinheiten 23 unmittelbar benachbart zueinander angeordnet.

Die Anzahl der Arbeitskanalgruppen 47 und folglich auch die Anzahl der Steuerventileinheiten 23 ist prinzipiell beliebig. Wird nur eine sehr geringe Anzahl von zweiten Kanalmündungen 16 benötigt, kann die Ventilanordnung 1 im Extremfall auch nur über eine einzige Arbeitskanalgruppe 47 mit zugeordneten, entlang der Mündungsverteilachse 48 aneinandergereihten Steuerventilen 8 verfügen.

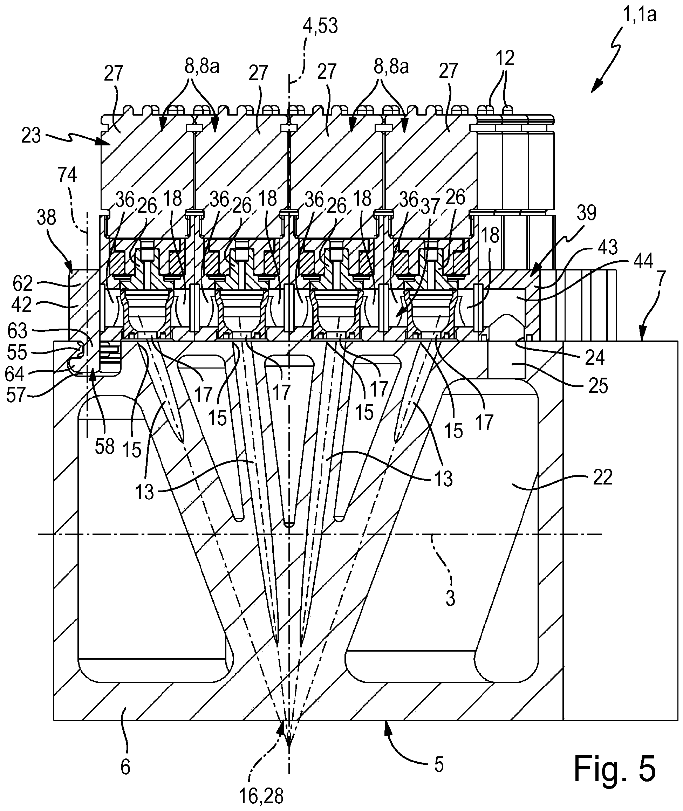

Sämtliche Arbeitskanäle 13 haben zweckmäßigerweise zwischen ihrer ersten Kanalmündung 15 und ihrer zweiten Kanalmündung 18 einen rein linearen Längsverlauf. Am besten ersichtlich ist dies aus den Figuren 4 und 5. Diese Figuren machen auch deutlich, dass die jeweils zur gleichen Arbeitskanalgruppe 47 gehörenden Arbeitskanäle 13, in Achsrichtung der Längsachse 2 des Ventilträgers 6 betrachtet, ausgehend von ihren zweiten Kanalmündungen 16 an der Kanalaustrittsfläche 5 in Richtung zur Bestückungsfläche 7 fächerförmig divergieren.

Die Größe es Schrägwinkels 52 korreliert mit dem Mündungsabstand zwischen den in der Mündungsreihe 46 unmittelbar benachbarten zweiten Kanalmündungen 16. Je kleiner der Mündungsabstand der zweiten Kanalmündungen 16 ist, desto steiler ist die Mündungsverteilachse 48 bzw. die Längsachse 34 bezüglich der Längsachse 2 angestellt. Im Rahmen der Erfindung können Ventilanordnungen 1 bereitgestellt werden, die im Konzept der Anordnung der Arbeitskanalgruppe 47 und der Steuerventile 8 übereinstimmen, sich jedoch in der Schrägstellung der Mündungsverteilachsen 48 bzw. der Aufreihungsrichtung der der gleichen Arbeitskanalgruppe 47 zugeordneten Steuerventile 8 voneinander unterscheiden.

Bei gleicher Anzahl identisch ausgebildeter Steuerventile 8 pro Arbeitskanalgruppe 47 kann der Ventilträger 6 in Achsrichtung der Querachse 3 umso schmäler ausgeführt werden, je flacher der Schrägwinkel 52 ist, d.h. je stärker sich die Ausrichtung der Mündungsverteilachse 48 an die Ausrichtung der Längsachse 2 annähert.

Die weiter oben schon angesprochenen Steuerventileinheit-Befestigungsmittel 45 können prinzipiell von beliebiger Art sein. Beispielsweise können sie als reine Schraubbefestigungsmittel ausgeführt sein. Besonders vorteilhaft in Bezug auf die Handhabbarkeit der Steuerventileinheiten 23 bei ihrer Montage und Demontage ist allerdings eine Ausführungsform, die zumindest teilweise auf eine Hakenverbindung setzt, was auf das Ausführungsbeispiel zutrifft.

Zu den Steuerventileinheit-Befestigungsmitteln 45 gehört exemplarisch eine im Bereich und bevorzugt neben der Bestückungsfläche 7 im Ventilträger 6 ausgebildete Verankerungsnut 54, die sich in Achsrichtung der Längsachse 2 des Ventilträgers 6 erstreckt. Die Verankerungsnut 54 ist einer der beiden längsseitigen Randbereiche der Bestückungsfläche 7 zugeordnet, und zwar derart, dass bei montierter Steuerventileinheit 23 deren erster stirnseitiger Endbereich 38 bei der Verankerungsnut 54 zu liegen kommt. Sie ist längsseits nach oben hin offen.

Die Verankerungsnut 54 hat einen hinterschnittenen Querschnitt mit einem seitlich von einer Längsrippe 55 begrenzten Nuthals 56. Der Nuthals 56 definiert eine schlitzartige längsseitige Öffnung der Verankerungsnut 54, die bevorzugt in der Ebene der Bestückungsfläche 7 liegt. An den Nuthals 56 schließt sich in der Tiefenrichtung der Verankerungsnut 54 ein von der Längsrippe 55 übergriffener Verankerungsabschnitt 57 der Verankerungsnut 54 an, der breiter ist als der Nuthals 56. Die Längsrippe 55 befindet sich an der zur Bestückungsfläche 7 beabstandeten Nutflanke, so dass sie, im Querschnitt gemäß Figuren 4 und 5 betrachtet, in Achsrichtung der Querachse 3 in Richtung zur Bestückungsfläche 7 ragt.

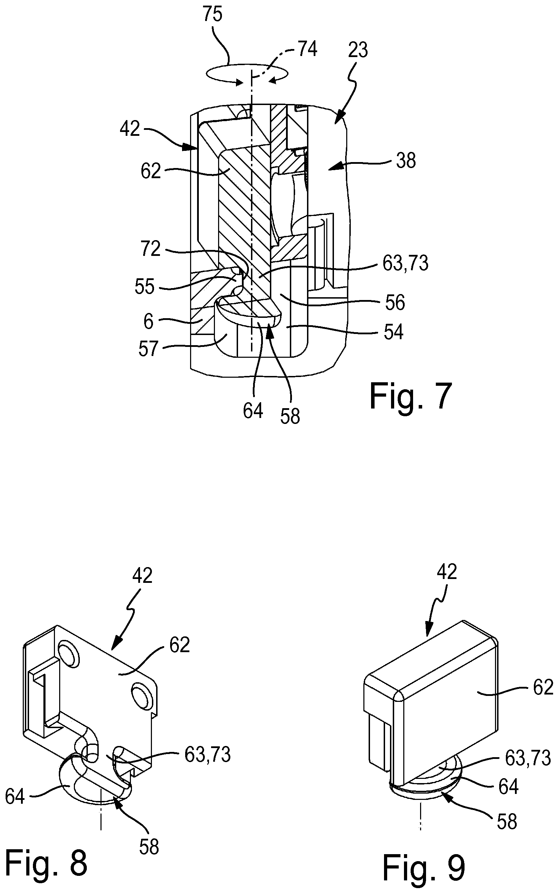

Jede Steuerventileinheit 54 weist an ihrem ersten stirnseitigen Endbereich 38 einen nach unten ragenden Verankerungshaken 58 auf. Beim modularen Aufbau der Steuerventileinheit 23 ist der Verankerungshaken 58 bevorzugt ein einstückiger Bestandteil des Endmoduls 52, das aus den Figuren 7 bis 9 gut ersichtlich ist. Der Verankerungshaken 58 hat einen sich ausgehend von einem Basisabschnitt 62 nach unten erstreckenden Schaftabschnitt 63, der in einen diesbezüglich einen größeren Querschnitt aufweisenden Hakenkopf 64 übergeht.

Im an die Bestückungsfläche 7 angesetzten Zustand der Steuerventileinheit 23 greift der Verankerungshaken 58 durch den Nuthals 56 hindurch in die Verankerungsnut 54 ein. Dabei durchsetzt der Schaftabschnitt 63 den Nuthals 56 und der in Achsrichtung der Längsachse 34 nach außen von den Steuerventilen 8 wegragende Hakenkopf 64 untergreift formschlüssig die Längsrippe 55. Auf diese Weise kann die Steuerventileinheit 23 an ihrem ersten stirnseitigen Endbereich 38 nicht mehr vom Ventilträger 6 abgehoben werden.

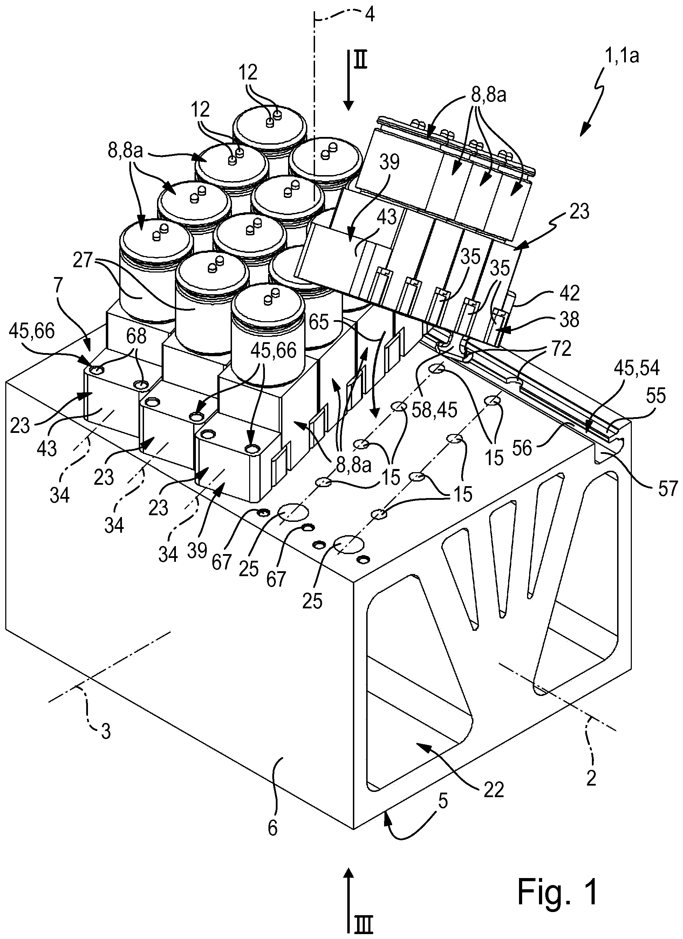

Der Verhakungsvorgang bei der Montage der Steuerventileinheit 23 wird gemäß Figur 1 derart ausgeführt, dass die Steuerventileinheit 23 mit schräger Ausrichtung und dem ersten stirnseitigen Endbereich 38 voran im Bereich der Bestückungsfläche 7 an den Ventilträger 6 herangeführt wird, bis der Verankerungshaken 58 in die Verankerungsnut 54 eintaucht. Anschließend wird die noch schrägstehende Steuerventileinheit 23 gemäß Pfeil 65 in Richtung zur Bestückungsfläche 7 herabgeschwenkt, bis sie schließlich an der Bestückungsfläche 7 anliegt.

Hieran anschließend wird die Steuerventileinheit 23 mit einer dem zweiten stirnseitigen Endbereich 39 zugeordneten weiteren Befestigungseinrichtung 66 auch im Bereich dieses zweiten stirnseitigen Endbereiches 39 am Ventilträger 6 fixiert. Nun ist die Steuerventileinheit 23 in der gewünschten Gebrauchsstellung am Ventilträger 6 befestigt.

Zu der weiteren Befestigungseinrichtung 66 gehören exemplarisch pro Steuerventileinheit 23 eine oder mehrere innerhalb der Bestückungsfläche 7 in den Ventilträger 6 eingebrachte Gewindebohrungen 67 und eine der Anzahl der Gewindebohrungen 67 entsprechende Anzahl von Befestigungsschrauben 68, die die Steuerventileinheit 23 an ihrem zweiten stirnseitigen Endbereich 39 durchsetzen, sich von oben her an diesem zweiten stirnseitigen Endbereich 39 abstützen und mit ihrem Gewindeschaft in die zugeordnete Gewindebohrung 67 einschraubbar oder eingeschraubt sind, um die Steuerventileinheit 23 mit dem Ventilträger 6 zu verspannen.

Während die weitere Befestigungseinrichtung 66 beim Ausführungsbeispiel also eine Schraubbefestigungseinrichtung ist, kann gemäß nicht gezeigtem Ausführungsbeispiel auch eine andere Befestigungsart vorliegen, beispielsweise eine Rastbefestigungseinrichtung oder eine auf Verriegelung basierende Befestigungseinrichtung.

Jeder Steuerventileinheit 23 ist an der Bestückungsfläche 7 ein eigener Bestückungsplatz zugeordnet, zu dem die mit der Steuerventileinheit 23 kommunizierenden Arbeitskanäle 13 und auch die Versorgungs-Zweigkanäle 25 ausmünden. Damit die Steuerventileinheiten 23 an dem für sie bestimmten Bestückungsplatz einfach positionierbar sind, ist es vorteilhaft, wenn in dem Ventilträger 6 eine Reihe von Indexaussparungen 72 ausgebildet ist, die mit Abstand zueinander in Achsrichtung der Längsachse 2 verteilt sind und deren Abstand zueinander dem Mittenabstand benachbarter Bestückungsplätze bzw. Steuerventileinheiten 23 entspricht. Beim Ansetzen an den Ventilträger 6 kann jede Steuerventileinheit 23 mit einem an ihr ausgebildeten Indexkörper 73 in die zugeordnete Indexaussparung 72 zur Positionsvorgabe eingeführt werden.

Im montierten Zustand der Steuerventileinheiten 23 betrachtet sind sowohl die Indexaussparungen 72 als auch die Indexkörper 73 zweckmäßigerweise den ersten stirnseitigen Endbereichen 38 der Steuerventileinheiten 23 zugeordnet. Beim Ausführungsbeispiel sind die Indexaussparungen 72 in die Längsrippe 55 der Verankerungsnut 54 eingebracht, während die Funktion des Indexkörpers 73 vom Schaftabschnitt 63 eines jeweiligen Verankerungshakens 58 übernommen wird. Beim schrägen Einführen des Verankerungshakens 58 in die Verankerungsnut 54 wird also nicht nur der Hakenkopf 64 unter die Längsrippe 55 eingeführt, sondern es wird gleichzeitig auch der als Indexkörper 73 fungierende Schaftabschnitt 63 in die zugeordnete Indexaussparung 72 eingeführt.

Zweckmäßigerweise hat jeder Verankerungshaken 58 zumindest partiell eine runde Außenkontur, was auf das Ausführungsbeispiel zutrifft. Auf diese Weise kann jede Steuerventileinheit 23 im in die Verankerungsnut 54 eingehakten Zustand um eine zur Bestückungsfläche 7 senkrechte Achse relativ zum Ventilträger 6 verschwenkt werden, solange die weitere Befestigungseinrichtung 66 noch nicht wirksam ist. Auf diese Weise besteht die Möglichkeit, ein und denselben Typ von Steuerventileinheit 23 zur Bestückung unterschiedlicher Ventilträger 6 zu verwenden, die sich im Schrägwinkel 52 der Mündungsverteilachse 48 voneinander unterscheiden.

Beim Ausführungsbeispiel wird die Schwenkachse 74 für diese Schwenkbewegung durch das Zusammenwirken des Schaftabschnittes 63 mit der Indexaussparung 72 definiert. Beide Komponenten sind in denjenigen Bereichen, in denen sie miteinander in Eingriff stehen, abgerundet. Damit der Hakenkopf 64 die Schwenkbewegung nicht behindert, ist auch er zumindest in dem die Längsrippe 55 untergreifenden Bereich mit einer abgerundeten Außenkontur versehen.

In Figur 7 ist die gedachte Schwenkachse 74 für die durch einen Doppelpfeil 75 angedeutete Schwenkbewegung der Steuerventileinheit 23 in einer zur Bestückungsfläche 7 parallelen Ebene strichpunktiert angedeutet. Diese Schwenkbewegung 75 findet in einer zur Bestückungsfläche 7 parallelen Ebene statt. Die Schwenkachse 74 ist dem ersten stirnseitigen Endbereich 38 der Steuerventileinheit 23 zugeordnet. Den größte Schwenkwinkel beim Verschwenken der Steuerventileinheit 23 überstreicht daher der entgegengesetzte zweite stirnseitige Endbereich 39.

## Patentansprüche

1. Ventilanordnung, mit einem sich entlang einer Längsachse (2) erstreckenden Ventilträger (6), der von mehreren in zueinander parallelen und zu seiner Längsachse (2) rechtwinkeligen Kanalerstreckungsebenen (14) verlaufenden Arbeitskanälen (13) durchsetzt ist, die jeweils einerseits, mit einer ersten Kanalmündung (15), zu einer zur Bestückung mit einer Mehrzahl von Steuerventilen (8) ausgebildeten Bestückungsfläche (7) und andererseits, mit einer zweiten Kanalmündung (16), zu einer Kanalaustrittsfläche (5) ausmünden, wobei die auf der Bestückungsfläche (7) montierten Steuerventile (8) jeweils mit einer der ersten Kanalmündungen (15) in Fluidverbindung stehen und wobei die zweiten Kanalmündungen (16) entlang der Längsachse (2) des Ventilträgers (6) in einer Reihe liegend aufeinanderfolgend angeordnet sind, wobei die ersten Kanalmündungen (15) mindestens einer Arbeitskanalgruppe (47) von Arbeitskanälen (13), deren zweite Kanalmündungen (16) in der Kanalaustrittsfläche (5) unmittelbar aufeinanderfolgend angeordnet sind, in der Bestückungsfläche (7) entlang einer bezüglich der Längsachse (2) des Ventilträgers (6) schräg ausgerichteten Mündungsverteilachse (48) mit Abstand aufeinanderfolgend angeordnet sind, wobei auch die auf der Bestückungsfläche (7) montierten und mit den zur gleichen Arbeitskanalgruppe (47) gehörenden ersten Kanalmündungen (15) in Fluidverbindung stehenden Steuerventile (8) entlang dieser schräg ausgerichteten Mündungsverteilachse (48) aufeinanderfolgend angeordnet sind, **dadurch gekennzeichnet, dass** der Ventilträger (6) eine zu seiner Längsachse (2) und zu der Bestückungsfläche (7) rechtwinkelige Hochachse (4) aufweist, wobei die zur gleichen Arbeitskanalgruppe (47) gehörenden ersten Kanalmündungen (15) auf einander entgegengesetzten Seiten einer von der Längsachse (2) und der Hochachse (4) des Ventilträgers (6) aufgespannten und die zweiten Kanalmündungen (16) durchsetzenden Mittelebene (53) liegen, wobei jede Mündungsverteilachse (48) um einen Schrägwinkel (52) geneigt zu der Mittelebene (53) ausgerichtet ist.

2. Ventilanordnung nach Anspruch 1, **dadurch gekennzeichnet, dass** die Arbeitskanäle (13) zu mehreren in Achsrichtung der Längsachse (2) des Ventilträgers (6) aufeinanderfolgend angeordneten Arbeitskanalgruppen (47) zusammengefasst sind, deren bezüglich der Längsachse (2) des Ventilträgers (6) schräg ausgerichtete Mündungsverteilachsen (48) in Achsrichtung der Längsachse (2) des Ventilträgers (6) mit Abstand aufeinanderfolgend angeordnet sind und parallel zueinander verlaufen.

3. Ventilanordnung nach Anspruch 1 oder 2, **dadurch gekennzeichnet, dass** die zur jeweils gleichen Arbeitskanalgruppe (47) gehörenden ersten Kanalmündungen (15) mit gleichem Abstand zueinander entlang der zugeordneten Mündungsverteilachse (48) angeordnet sind.

4. Ventilanordnung nach einem der Ansprüche 1 bis 3, **dadurch gekennzeichnet, dass** jede Arbeitskanalgruppe (47) mindestens zwei und zweckmäßigerweise vier Arbeitskanäle (13) umfasst und/oder dass jedes Steuerventil (8) ein elektrisch betätigbares 2/2-Wegeventil ist.

5. Ventilanordnung nach einem der Ansprüche 1 bis 4, **dadurch gekennzeichnet, dass** die die zweiten Kanalmündungen (16) enthaltende Kanalaustrittsfläche (5) von der die ersten Kanalmündungen (15) enthaltenden Bestückungsfläche (7) abgewandt und entgegengesetzt zu der Bestückungsfläche (7) orientiert ist.

6. Ventilanordnung nach einem der Ansprüche 1 bis 5, **dadurch gekennzeichnet, dass** jeder Arbeitskanal (13) zwischen seiner ersten Kanalmündung (15) und seiner zweiten Kanalmündung (16) durchgehend einen linearen Längsverlauf hat.

7. Ventilanordnung nach einem der Ansprüche 1 bis 6, **dadurch gekennzeichnet, dass** die zur gleichen Arbeitskanalgruppe (47) gehörenden Arbeitskanäle (13), in Achsrichtung der Längsachse (2) des Ventilträgers (6) betrachtet, ausgehend von der Kanalaustrittsfläche (5) in Richtung zur Bestückungsfläche (7) fächerförmig auseinanderstreben.

8. Ventilanordnung nach einem der Ansprüche 1 bis 7, **dadurch gekennzeichnet, dass** die der jeweils gleichen Arbeitskanalgruppe (47) zugeordneten Steuerventile (8) in einer eine Längsachse (34) aufweisenden selbsttragenden Steuerventileinheit (23) zusammengefasst sind, wobei die zur gleichen Steuerventileinheit (23) gehörenden Steuerventile (8) in der Längsrichtung der Steuerventileinheit (23) aufeinanderfolgend angeordnet sind und die Längsachse (34) jeder an der Bestückungsfläche (7) montierten Steuerventileinheit (23) parallel zur zugeordneten Mündungslängsachse (48) und somit schräg zur Längsachse (2) des Ventilträgers (6) ausgerichtet ist.

9. Ventilanordnung nach Anspruch 8, **dadurch gekennzeichnet, dass** die Steuerventileinheiten (23) einen modularen Aufbau haben, wobei die zur gleichen Steuerventileinheit (23) gehörenden Steuerventile (8) als eigenständige Ventilmodule (8a) aneinander angebaut sind.

10. Ventilanordnung nach Anspruch 8 oder 9, **dadurch gekennzeichnet, dass** sich im Innern des Ventilträgers (6) mindestens ein sich in der Längsrichtung (2) des Ventilträgers (6) erstreckender, das von den Steuerventilen (8) zu steuerndes Fluid bereitstellender Hauptversorgungskanal (22) erstreckt, von dem zu der Bestückungsfläche (7) ausmündende Versorgungs-Zweigkanäle (25) abzweigen, die zur Versorgung der Steuerventile (8) jeweils mit einer der an der Bestückungsfläche (7) montierten Steuerventileinheiten (23) in Fluidverbindung stehen.

11. Ventilanordnung nach einem der Ansprüche 8 bis 10, **dadurch gekennzeichnet, dass** sie über Steuerventileinheit-Befestigungsmittel (45) zur voneinander unabhängigen lösbaren Befestigung der Steuerventileinheiten (23) am Ventilträger (6) verfügt.

12. Ventilanordnung nach Anspruch 11, **dadurch gekennzeichnet, dass** die Steuerventileinheit-Befestigungsmittel (45) eine im Bereich der Bestückungsfläche (7) im Ventilträger (6) ausgebildete, sich in Achsrichtung der Längsachse (2) des Ventilträgers (6) erstreckende Verankerungsnut (54) enthalten und pro Steuerventileinheit (23) einen an einem ersten stirnseitigen Endbereich (38) der Steuerventileinheit (23) angeordneten, zum lösbaren Einhaken in die Verankerungsnut (54) ausgebildeten Verankerungshaken (58) aufweisen, wobei die Steuerventileinheit-Befestigungsmittel (45) außerdem pro Steuerventileinheit (23) eine weitere Befestigungseinrichtung (66) aufweisen, die dem dem ersten stirnseitigen Endbereich (38) entgegengesetzten zweiten stirnseitigen Endbereich (39) der Steuerventileinheit (23) zugeordnet ist und durch die die in die Verankerungsnut (54) eingehakte Steuerventileinheit (23) an dem Ventilträger (6) fixierbar ist, wobei diese weitere Befestigungseinrichtung (66) zweckmäßigerweise eine Schraubbefestigungseinrichtung ist.

13. Ventilanordnung nach Anspruch 12, **dadurch gekennzeichnet, dass** jeder Verankerungshaken (58) zumindest partiell eine runde Außenkontur hat, sodass die Steuerventileinheit (23) im in die Verankerungsnut (54) eingehakten Zustand um eine dem Verankerungshaken (58) zugeordnete, zur Bestückungsfläche (7) senkrechte Schwenkachse (74) relativ zum Ventilträger (6) verschwenkbar ist und/oder dass jeder Verankerungshaken (58) einen Indexkörper (73) bildet, der zur Positionierung der zugeordneten Steuerventileinheit (23) in eine am Rand der Verankerungsnut (54) ausgebildete Indexaussparung (72) einführbar ist.

14. Ventilanordnung nach einem der Ansprüche 1 bis 13, **dadurch gekennzeichnet, dass** sie als eine Sortiervorrichtung (la) zum Aussortieren von Teilen mittels Luftstößen ausgebildet ist, wobei jeder Arbeitskanal (13) mit einer zur Ausgabe von Luftstößen genutzten Sortierdüse (28) kommuniziert.

## Claims

1. Valve assembly, with a valve carrier (6) extending along its longitudinal axis (2) and through which pass several working passages (13) running in passage extension planes (14) parallel to one another and at right-angles to its longitudinal axis (2), each leading on the one hand, with a first passage orifice (15), to a mounting face (7) designed for equipping with a multiplicity of control valves (8), and on the other hand, with a second passage orifice (16), to a passage outlet face (5), wherein the control valves (8) mounted on the mounting face (7) are each in fluidic connection with one of the first passage orifices (15), and wherein the second passage orifices (16) are arranged lying consecutive in a row along the longitudinal axis (2) of the valve carrier (6), wherein the first passage orifices (15) of at least one working passage group (47) of working passages (13), which have second passage orifices (16) arranged directly consecutively in the passage outlet face (5), are arranged in the mounting face (7) consecutively with spacing along an orifice distribution axis (48) aligned obliquely relative to the longitudinal axis (2) of the valve carrier (6), wherein the control valves (8) also mounted on the mounting face (7) and in fluidic connection with the first passage orifices (15) belonging to the same working passage group (47) are arranged consecutively along this obliquely aligned orifice distribution axis (48), **characterised in that** the valve carrier (6) has a vertical axis (4) at right-angles to its longitudinal axis (2) and to the mounting face (7), wherein the first passage orifices (15) belonging to the same working passage group (47) lie on opposite sides of a middle plane (53) spanned by the longitudinal axis (2) and the vertical axis (4) of the valve carrier (6) and passing through the second passage orifices (16), wherein each orifice distribution axis (48) is aligned tilted around an oblique angle (52) to the middle plane (53).

2. Valve assembly according to claim 1, **characterised in that** the working passages (13) are combined into several working passage groups (47) arranged consecutively in the axial direction of the longitudinal axis (2) of the valve carrier (6) and with their orifice distribution axes (48) aligned obliquely relative to the longitudinal axis (2) of the valve carrier (6), arranged consecutively with spacing in the axial direction of the longitudinal axis (2) of the valve carrier (6) and running parallel to one another.

3. Valve assembly according to claim 1 or 2, **characterised in that** the first passage orifices (15) belonging to the same respective working passage group (47) are arranged with equal spacing from one another along the assigned orifice distribution axis (48).

4. Valve assembly according to any of claims 1 to 3, **characterised in that** each working passage group (47) includes at least two and expediently four working passages (13), and/or that each control valve (8) is an electrically actuable 2/2-way valve.

5. Valve assembly according to any of claims 1 to 4, **characterised in that** the passage outlet face (5) containing the second passage orifices (16) faces away from the mounting face (7) containing the first passage orifices (15) and is oriented opposite to the mounting face (7).

6. Valve assembly according to any of claims 1 to 5, **characterised in that** each working passage (13) has a continuous linear longitudinal course between its first passage orifice (15) and its second passage orifice (16).

7. Valve assembly according to any of claims 1 to 6, **characterised in that** working passages (13) belonging to the same working passage group (47), viewed in the axial direction of the longitudinal axis (2) of the valve carrier (6), diverge in a fanlike manner from the passage outlet face (5) towards the mounting face (7).

8. Valve assembly according to any of claims 1 to 7, **characterised in that** the control valves (8) assigned to the respective same working passage group (47) are combined in a self-supporting control valve unit (23) with a longitudinal axis (34), wherein the control valves (8) belonging to the same control valve unit (23) are arranged consecutively in the longitudinal direction of the control valve unit (23), and the longitudinal axis (34) of each control valve unit (23) mounted on the mounting face (7) is aligned parallel to the assigned orifice distribution axis (48) and thus obliquely to the longitudinal axis (2) of the valve carrier (6).

9. Valve assembly according to claim 8, **characterised in that** the control valve units (23) have a modular structure, wherein control valves (8) belonging to the same control valve unit (23) are fitted to one another as independent valve modules (8a).

10. Valve assembly according to claim 8 or 9, **characterised in that** there extends inside the valve carrier (6) at least one main supply passage (22), extending in the longitudinal direction (2) of the valve carrier (6) and providing fluid to be controlled by the control valves (8), and from which branch off supply branch passages (25) leading to the mounting face (7) and, to supply the control valves (8), are each in fluidic connection with one of the control valve units (23) mounted on the mounting face (7).

11. Valve assembly according to any of claims 8 to 10, **characterised in that** it has control valve unit mounting means (45) for fastening the control valve units (23), releasable independently of one another, to the valve carrier (6).

12. Valve assembly according to claim 11, **characterised in that** the control valve unit mounting means (45) contain an anchoring slot (54), formed in the valve carrier (6) in the area of the mounting face (7) and extending in the axial direction of the longitudinal axis (2) of the valve carrier (6), and have for each control valve unit (23) an anchoring hook (58), located on a first end face end section (38) of the control valve unit (23) and designed for releasable hooking into the anchoring slot (54), wherein the control valve unit mounting means (45) also have for each control valve unit (23) a further mounting device (66) which is assigned to the second end face end section (39) of the control valve unit (23) opposite the first end face end section (38), and by which the control valve unit (23) hooked into the anchoring slot (54) may be fixed to the valve carrier (6), wherein this further mounting device (66) is expediently a screw mounting device.

13. Valve assembly according to claim 12, **characterised in that** each anchoring hook (58) has at least partly a round external contour, so that the control valve unit (23), in the state of being hooked into the anchoring slot (54), may be pivoted relative to the valve carrier (6) around a swivel axis (74) assigned to the anchoring hook (58) and perpendicular to the mounting face (7), and/or that each anchoring hook (58) forms an index body (73) which, for positioning the assigned control valve unit (23), may be inserted in an index recess (72) formed on the edge of the anchoring slot (54).

14. Valve assembly according to any of claims 1 to 13, **characterised in that** it is designed as a sorting device (1a) for the sorting of parts by means of air blasts, wherein each working passage (13) communicates with a sorting nozzle (28) used for the emission of air blasts.

## Revendications

1. Ensemble de vannes, avec un support de vanne (6) s'étendant le long d'un axe longitudinal (2), qui est traversé par plusieurs canaux de travail (13) s'étendant dans des plans d'extension de canaux (14) parallèles les uns par rapport aux autres et perpendiculaires par rapport à son axe longitudinal (2), qui débouchent respectivement d'une part, par une première embouchure de canal (15), en direction d'une surface de chargement (7) réalisée aux fins du chargement avec une multitude de vannes de commande (8), et d'autre part, par une seconde embouchure de canal (16), en direction d'une surface de sortie de canal (5), dans lequel les vannes de commande (8) montées sur la surface de chargement (7) sont en communication fluidique respectivement avec une des premières embouchures de canal (15) et dans lequel les secondes embouchures de canal (16) sont disposées le long de l'axe longitudinal (2) du support de vanne (6) les unes après les autres en une rangée, dans lequel les premières embouchures de canal (15) d'au moins un groupe de canaux de travail (47) de canaux de travail (13), dont les secondes embouchures de canal (16) sont disposées directement les unes après les autres dans la surface de sortie de canal (5), sont disposées les unes après les autres à distance dans la surface de chargement (7) le long d'un axe de répartition d'embouchure (48) orienté de manière oblique par rapport à l'axe longitudinal (2) du support de vanne (6), dans lequel les vannes de commande (8) montées sur la surface de chargement (7) et se trouvant en communication fluidique avec les premières embouchures de canal (15) faisant partie du même groupe de canaux de travail (47) sont disposées les unes après les autres le long dudit axe de répartition d'embouchure (48) orienté de manière oblique, **caractérisé en ce que** le support de vanne (6) présente un axe vertical (4) perpendiculaire par rapport à son axe longitudinal (2) et par rapport à la surface de chargement (7), dans lequel les premières embouchures de canal (15) faisant partie du même groupe de canaux de travail (47) se situent sur des côtés opposés les uns aux autres d'un plan médian (53) formé par l'axe longitudinal (2) et l'axe vertical (4) du support de vanne (6) et traversant les secondes embouchures de canal (16), dans lequel chaque axe de répartition d'embouchure (48) est orienté de manière inclinée par rapport au plan médian (53) autour d'un angle oblique (52).

2. Ensemble de vannes selon la revendication 1, **caractérisé en ce que** les canaux de travail (13) sont regroupés de manière à former plusieurs groupes de canaux de travail (47) disposés les uns après les autres dans une direction axiale de l'axe longitudinal (2) du support de vanne (6), dont les axes de répartition d'embouchure (48) orientés de manière oblique par rapport à l'axe longitudinal (2) du support de vanne (6) sont disposés les uns après les autres à distance dans une direction axiale de l'axe longitudinal (2) du support de vanne (6) et s'étendent de manière parallèle les uns par rapport aux autres.

3. Ensemble de vannes selon la revendication 1 ou 2, **caractérisé en ce que** les premières embouchures de canal (15) faisant partie respectivement du groupe de canaux de travail (47) identique sont disposées à une distance identique les unes par rapport aux autres le long de l'axe de répartition d'embouchure (48) associé.

4. Ensemble de vannes selon l'une quelconque des revendications 1 à 3, **caractérisé en ce que** chaque groupe de canaux de travail (47) comprend au moins deux et de manière appropriée quatre canaux de travail (13), et/ou que chaque vanne de commande (8) est un distributeur à 2/2 voies pouvant être actionné de manière électrique.

5. Ensemble de vannes selon l'une quelconque des revendications 1 à 4, **caractérisé en ce que** la surface de sortie de canal (5) contenant les secondes embouchures de canal (16) est orientée de manière détournée de la surface de chargement (7) contenant les premières embouchures de canal (15) et de manière opposée par rapport à la surface de chargement (7).

6. Ensemble de vannes selon l'une quelconque des revendications 1 à 5, **caractérisé en ce que** chaque canal de travail (13) a un profil longitudinal linéaire en continu entre sa première embouchure de canal (15) et sa seconde embouchure de canal (16).

7. Ensemble de vannes selon l'une quelconque des revendications 1 à 6, **caractérisé en ce que** les canaux de travail (13) faisant partie du même groupe de canaux de travail (47) identique, vus dans une direction axiale de l'axe longitudinal (2) du support de vanne (6), divergent en partant de la surface de sortie de canal (5) en direction de la surface de chargement (7) de manière à présenter une forme d'éventail.

8. Ensemble de vannes selon l'une quelconque des revendications 1 à 7, **caractérisé en ce que** les vannes de commande (8) associées au groupe de canaux de travail (47) respectivement identique sont regroupées en une unité de vannes de commande (23) autoporteuse présentant un axe longitudinal (34), dans lequel les vannes de commande (8) faisant partie de la même unité de vannes de commande (23) sont disposées dans le sens longitudinal de l'unité de vannes de commande (23) les unes après les autres et l'axe longitudinal (34) de chaque unité de vanne de commande (23) montée au niveau de la surface de chargement (7) est orienté de manière parallèle par rapport à l'axe longitudinal d'embouchure (48) associé et ainsi de manière oblique par rapport à l'axe longitudinal (2) du support de vanne (6).

9. Ensemble de vannes selon la revendication 8, **caractérisé en ce que** les unités de vannes de commande (23) ont une structure modulaire, dans lequel les vannes de commande (8) faisant partie de la même unité de vannes de commande (23) sont élaborées les unes contre les autres sous la forme de modules de vanne (8a) autonomes.

10. Ensemble de vannes selon la revendication 8 ou 9, **caractérisé en ce que** s'étend à l'intérieur du support de vanne (6), au moins un canal d'alimentation principal (22) s'étendant dans la direction longitudinale (2) du support de vanne (6), devant être commandé par les vannes de commande (8), fournissant du fluide, avec lequel des canaux d'embranchement d'alimentation (25) débouchant en direction de la surface de chargement (7), qui sont en communication fluidique aux fins de l'alimentation des vannes de commande (8) respectivement avec une des unités de vannes de commande (23) montées sur la surface de chargement (7), forment un embranchement.

11. Ensemble de vannes selon l'une quelconque des revendications 8 à 10, **caractérisé en ce qu'**il dispose de moyens de fixation d'unité de vannes de commande (45) servant à fixer de manière amovible indépendamment les unes des autres les unités de vannes de commande (23) au niveau du support de vanne (6).

12. Ensemble de vannes selon la revendication 11, **caractérisé en ce que** les moyens de fixation d'unité de vannes de commande (45) contiennent une rainure d'ancrage (54) réalisée dans la zone de la surface de chargement (7) dans le support de vanne (6), s'étendant dans la direction axiale de l'axe longitudinal (2) du support de vanne (6) et présentent, par unité de vannes de commande (23), un crochet d'ancrage (58) disposé au niveau d'une première zone d'extrémité côté frontal (38) de l'unité de vannes de commande (23), réalisé pour être accroché de manière amovible dans la rainure d'ancrage (54), dans lequel les moyens de fixation d'unité de vannes de commande (45) présentent par ailleurs par unité de vannes de commande (23) un autre système de fixation (66), qui est associé à la deuxième zone d'extrémité côté frontal (39), opposée à la première zone d'extrémité côté frontal (38), de l'unité de vannes de commande (23) et peut être fixé au niveau du support de vanne (6) par l'unité de vannes de commande (23) accrochée dans la rainure d'ancrage (54), dans lequel ledit autre système de fixation (66) est de manière appropriée un système de fixation par vissage.

13. Ensemble de vannes selon la revendication 12, **caractérisé en ce que** chaque crochet d'ancrage (58) a au moins en partie un contour extérieur rond si bien que l'unité de vannes de commande (23) peut être pivotée, dans l'état accroché dans la rainure d'ancrage (54), par rapport au support de vanne (6) autour d'un axe de pivotement (74) associé au crochet d'ancrage (58), perpendiculaire par rapport à la surface de chargement (7), et/ou que chaque crochet d'ancrage (58) forme un corps à index (73), qui peut être introduit dans un évidement à index (72) réalisé au niveau du bord de la rainure d'ancrage (54) aux fins du positionnement de l'unité de vannes de commande (23) associée.

14. Ensemble de vannes selon l'une quelconque des revendications 1 à 13, **caractérisé en ce qu'**il est réalisé sous la forme d'un dispositif de tri (1a) servant à trier des parties au moyen d'air soufflé, dans lequel chaque canal de travail (13) communique avec une buse de tri (28) utilisée pour distribuer de l'air soufflé.
